(19) **Europäisches Patentamt / European Patent Office / Office européen des brevets**

(11) **EP 4 539 292 A1**

(12) **DEMANDE DE BREVET EUROPEEN**

(43) Date de publication:
**16.04.2025 Bulletin 2025/16**

(21) Numéro de dépôt: **24205772.7**

(22) Date de dépôt: **10.10.2024**

(51) Classification Internationale des Brevets (IPC):
**H02J 3/38** (2006.01)     **H02J 13/00** (2006.01)

(52) Classification Coopérative des Brevets (CPC):
**H02J 13/00001; H02J 3/381;** H02J 2203/20

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **13.10.2023 FR 2311015**

(71) Demandeur: **Commissariat à l'Energie Atomique et aux Energies Alternatives 75015 Paris (FR)**

(72) Inventeurs:
• **LAMAISON, Nicolas**
  **38054 Grenoble Cedex 09 (FR)**
• **WISSOCQ, Thibaut**
  **38054 Grenoble Cedex 09 (FR)**

(74) Mandataire: **Cabinet Camus Lebkiri 25 rue de Maubeuge 75009 Paris (FR)**

(54) **PROCÉDÉ D'ÉVALUATION D'UN MODÈLE DÉCRIVANT UN SYSTÈME ÉNERGÉTIQUE**

(57)     Un aspect de l'invention concerne un procédé, mis en oeuvre par ordinateur, d'évaluation d'un modèle agrégé (320) décrivant un système énergétique, le système énergétique comprenant une pluralité de réseaux énergétiques (21, 22, 23), chaque réseau énergétique comprenant une pluralité d'entités énergétiques, chaque entité énergétique étant associée à une production d'énergie respective pour chaque réseau énergétique, chaque réseau énergétique étant associé à une demande énergétique respective.

```
REC_MILP(RDC)        ⌇ 210
        ↓
REC_MILP(AGREG)      ⌇ 220
        ↓
DET_MILP(QUANT)      ⌇ 230
        ↓
SOLV_MILP(QUANT)     ⌇ 235
        ↓
EVAL                 ⌇ 240
        ↓
DET_CONST            ⌇ 250
```

**FIGURE 2**

EP 4 539 292 A1

**Description**

**DOMAINE TECHNIQUE DE L'INVENTION**

Le domaine technique de l'invention est celui de la production d'énergie et de la modélisation des systèmes énergétiques, notamment des systèmes énergétiques multi-vecteurs à grande échelle.

En particulier, l'invention concerne l'évaluation de la qualité d'un modèle d'un système énergétique par rapport aux contraintes locales des différents réseaux énergétiques composant le système énergétique.

**ARRIERE-PLAN TECHNOLOGIQUE DE L'INVENTION**

La modélisation des systèmes énergétiques à l'échelle de plusieurs régions ou de plusieurs pays est devenue un enjeu majeur à l'heure où la gestion et l'efficacité énergétiques sont au coeur des préoccupations au niveau national, communautaire et international.

De tels modèles doivent idéalement prendre en compte la complexité structurelle des systèmes énergétiques, notamment le fait qu'ils sont « multi-vecteurs », dans le sens où ils regroupent des types de réseaux différents, notamment des réseaux électriques, des réseaux de gaz et des réseaux de chaleur, et dont les différents réseaux peuvent être localisés à des endroits différents (deux villes différentes voire deux pays différents). L'objectif est d'étudier le couplage entre ces différents réseaux pour optimiser le système énergétique dans sa globalité. En effet, il existe des interactions entre ces réseaux, via des composants tels que les systèmes de co- et trigénération, les pompes à chaleur, les piles à combustibles, les électrolyseurs, etc. L'interaction entre ces réseaux peut accentuer leur flexibilité, notamment grâce aux systèmes de stockage en place. Chaque réseau peut dès lors profiter des stockages des autres réseaux grâce au couplage.

Dans l'idéal, chaque réseau devrait d'abord être modélisé de manière fine et indépendante, puis le modèle global devrait intégrer les interactions entre les réseaux entre les différents réseaux. Cette approche n'est pas réalisable en pratique, du fait de la complexité du problème d'optimisation sous-jacent, lié au grand nombre de réseaux à considérer. Il est donc nécessaire d'opter pour des méthodes de simplification de problèmes, par exemple des méthodes d'agrégation.

Il existe actuellement des modèles de systèmes énergétiques à l'échelle nationale ou européenne, qui tiennent compte du couplage entre différents réseaux, et qui reposent sur des modèles agrégés. Par exemple, dans le cadre d'une modélisation des réseaux énergétiques en Europe, les différents réseaux énergétiques de chaque pays peuvent être regroupés en noeuds, un noeud représentant un pays. La production énergétique associée à tous les réseaux énergétiques d'un pays est modélisée par une production agrégée, tout comme la demande énergétique. La taille du problème d'optimisation associé est ainsi réduite, ce qui rend sa résolution faisable au niveau calculatoire. Des exemples de l'état de la technique sont présentés dans les documents US 2019/288551 A1, CA 2 745 357 C et EP 3 989 383 A1.

Toutefois, ces modèles ne sont pas satisfaisants dès lors qu'ils intègrent des réseaux de chaleur, car ils ne tiennent pas forcément compte des limitations associées à de tels réseaux. Une première limitation réside dans la multiplicité des moyens de production de chaleur (par combustion de gaz, de fioul, de biomasse, par technologie solaire thermique, par géothermie, via des pompes à chaleur, etc.), qui doivent être représentés et différenciés dans le modèle énergétique. Une deuxième limitation réside dans le fait qu'un réseau de chaleur est un réseau non distribué (non interconnecté) à l'échelle nationale. En d'autres termes, les moyens de production d'un réseau de chaleur sont spécifiques à ce réseau de chaleur et ne peuvent pas nécessairement répondre à la demande d'autres réseaux de chaleur. Par exemple, un moyen de production situé dans une ville ne peut pas fournir de la chaleur à une autre ville si les deux villes sont éloignées géographiquement, car il n'existe pas de moyen de transport de la chaleur sur de longues distances.

Ces limitations ont déjà été constatées dans différents articles utilisant de tels modèles agrégés, mais aucune solution n'a été proposée jusqu'à présent.

Il existe donc un besoin pour une modélisation des réseaux de chaleur qui soit plus fidèle à la réalité et qui intègre les contraintes techniques liés à de tels réseaux.

**RESUME DE L'INVENTION**

L'invention offre une solution aux problèmes évoqués précédemment, en permettant d'évaluer un modèle agrégé associé à un système énergétique, et en particulier d'évaluer les écarts entre des profils de distribution d'énergie obtenus à partir du modèle agrégé et des contraintes locales des unités de production d'énergie.

Un aspect de l'invention concerne ainsi un procédé, mis en oeuvre par ordinateur, d'évaluation d'un modèle agrégé décrivant un système énergétique, le système énergétique comprenant une pluralité de réseaux énergétiques, chaque réseau énergétique comprenant une pluralité d'entités énergétiques, chaque entité énergétique étant associée à une production d'énergie respective pour au moins un réseau énergétique, chaque réseau énergétique étant associé à une demande énergétique respective, le procédé comprenant :

- pour chaque réseau énergétique de la pluralité de réseaux énergétiques, recevoir un modèle respectif associé audit réseau énergétique, ledit modèle décrivant une relation entre une demande énergétique dudit réseau énergétique et les productions d'énergie des entités énergétiques pour ledit réseau énergétique ;

- recevoir le modèle agrégé associé au système énergétique, le modèle agrégé comprenant au moins une relation entre au moins une production d'énergie agrégée associée au système énergétique et les productions d'énergie des entités énergétiques ;

- construire un modèle d'évaluation du modèle agrégé à partir :

  des relations entre les demandes énergétiques et les productions d'énergie des entités énergétiques pour la pluralité de réseaux énergétiques ;
  de l'au moins une relation entre l'au moins une production d'énergie agrégée associée au système énergétique et les productions d'énergie des entités énergétiques pour la pluralité de réseaux énergétiques, modifiée pour intégrer au moins une variable d'ajustement représentant un écart entre l'au moins une production d'énergie agrégée associée au système énergétique et les productions d'énergie des entités énergétiques ;

  ledit modèle d'évaluation étant associé à une fonction objectif dépendant de l'au moins une variable d'ajustement ;

- pour un sous-ensemble de réseaux énergétiques parmi la pluralité de réseaux énergétiques, recevoir :

  pour chaque réseau énergétique du sous-ensemble de réseaux énergétiques, une valeur de demande énergétique respective associée audit chaque réseau énergétique ;

  au moins une valeur de production d'énergie agrégée associée au sous-ensemble de réseaux énergétiques ;

- déterminer, à partir des valeurs reçues de demandes énergétiques et de production d'énergie agrégée, des valeurs des productions d'énergie des entités énergétiques et de l'au moins une variable d'ajustement qui optimisent la fonction objectif ;

- évaluer une qualité du modèle agrégé à partir d'une valeur de la fonction objectif calculée pour les valeurs des productions d'énergie des entités énergétiques et de l'au moins une variable d'ajustement déterminées.

Par « entité énergétique », il est entendu une entité apte à apporter de l'énergie au système énergétique, et plus précisément à un ou plusieurs réseaux énergétiques du système énergétique. Par « production d'énergie », il est entendu un paramètre mesurant la capacité de production d'énergie d'une entité énergétique.

Chaque réseau énergétique est associé à un modèle traduisant un problème d'optimisation entre la demande énergétique du réseau énergétique et les productions d'énergie des entités énergétiques aptes à apporter de l'énergie au réseau énergétique considéré. Chaque réseau énergétique est ainsi soumis à des contraintes « locales » (i.e. à l'échelle du réseau énergétique) qui font partie du modèle associé au réseau énergétique.

Par « modèle agrégé », il est entendu un modèle associé au système énergétique tout entier, paramétré par des données (par exemple une demande agrégée, une production agrégée, ...) déterminées à partir des données associées aux réseaux énergétiques. En d'autres termes, le système énergétique est représenté par un ensemble de paramètres dits agrégés, qui sont déterminés à partir des paramètres des réseaux énergétiques. Par exemple, la demande énergétique du modèle agrégé peut être égale à la somme des demandes énergétiques de l'ensemble des réseaux énergétiques. Similairement, la production énergétique du modèle agrégé peut être égale à la somme des productions énergétiques des réseaux énergétiques.

Le modèle agrégé permet donc de modéliser un système énergétique de grande taille à partir de données agrégées. L'idée est d'utiliser un modèle approché de plus petite taille, là où il ne serait pas possible de modéliser de manière exacte le système (car le problème serait impossible à résoudre).

L'utilisation de modèles agrégés pour les systèmes de grande échelle est classique et permet notamment de déterminer une répartition de l'énergie entre les différentes entités du système (optimisation du mix énergétique), ou de déterminer les besoins de production d'énergie pour une zone géographique donnée (par exemple quartier, ville, région, pays ou continent). La qualité de la répartition et son utilisation en pratique pour les systèmes de grande échelle est donc directement liée à la qualité du modèle agrégé.

L'agrégation de données s'accompagne inévitablement d'une perte d'information, qui devient problématique lorsque la résolution du modèle agrégé fournit une solution qui n'est pas réalisable en pratique, du fait de certaines contraintes locales qui ne sont pas retranscrites dans le modèle agrégé. Le but de l'invention est justement d'évaluer la qualité du modèle agrégé en termes de faisabilité et d'applicabilité de la solution obtenue. L'invention permet en outre de déterminer à quels endroits se situent les écarts entre le modèle agrégé et les contraintes locales, ce qui permet à un expert d'analyser plus finement ces endroits et d'en déduire des contraintes, qui peuvent ensuite être réinjectées dans le modèle agrégé afin de l'améliorer.

L'évaluation du modèle agrégé est effectuée par le biais d'un modèle d'évaluation construit à partir des paramètres des modèles « locaux » (i.e. des modèles associés aux réseaux énergétiques) et des paramètres du modèle agrégé, et qui intègre une ou plusieurs variables d'ajustement garantissant l'obtention d'une solution.

Ce modèle d'évaluation est résolu sur un ensemble restreint de réseaux (sa résolution à grande échelle ne serait pas réalisable). Les variables d'ajustement ainsi obtenues permettent de déterminer la qualité du modèle agrégé.

Par exemple, les modèles associés à la pluralité de réseaux énergétiques, le modèle agrégé et le modèle d'évaluation sont des modèles MILP.

Dans des modes de réalisation, les réseaux énergétiques sont des réseaux de chaleur, les entités énergétiques sont des entités génératrices de chaleur, les demandes énergétiques sont des demandes en chaleur, et les productions d'énergie sont des puissances thermiques.

Il est entendu que l'utilisation de l'invention pour des réseaux de chaleur est l'une des applications possibles de l'invention, mais que l'invention ne se limite pas à cette application.

Par exemple, chaque entité énergétique peut être associée à un type d'entité parmi un ensemble de types d'entités, et l'au moins une production d'énergie agrégée associée au système énergétique peut comprendre une production d'énergie agrégée pour chaque type d'entité parmi l'ensemble de types d'entités.

Les types d'entités peuvent être par exemple : pompe à chaleur, chaudière électrique, chaudière biomasse, etc.

Dans un mode de réalisation, pour chaque réseau énergétique, la relation, dans le modèle associé au réseau énergétique, entre la demande énergétique $D_{rdc}$ dudit réseau énergétique et les productions d'énergie $P_{i_{g,rdc}}$ des entités énergétiques $i_{g,rdc}$ pour ledit réseau énergétique $rdc$ est, pour chaque pas de temps $t$ parmi une pluralité de pas de temps :

$$D_{rdc} = \sum_{g} \sum_{i_{g,rdc}} P_{i_{g,rdc}}$$

où $g$ est un indice représentant le type d'entité, et $i_{g,rdc}$ est un indice représentant une entité énergétique de type $g$ dans le réseau énergétique $rdc$.

Il est donc entendu que toutes ces quantités varient en fonction du pas de temps considéré.

En outre, l'au moins une valeur de production d'énergie agrégée associée au sous-ensemble de réseaux énergétiques reçue peut comprendre un ensemble de valeurs de productions d'énergie agrégées $P_g^{agreg}$, chacune étant associée à un type d'entité $g$ respectif parmi l'ensemble de types d'entités ; dans lequel l'au moins une variable d'ajustement comprend, pour chaque entité énergétique $i_{q,rdc}$, une variable d'ajustement positive $\delta_{i_{g,rdc}}^{+}$ respective et une variable d'ajustement négative $\delta_{i_{g,rdc}}^{-}$ respective. Pour chaque réseau énergétique $rdc$ et pour chaque pas de temps $t$, les valeurs $P_{i_{g,rdc}}$ des productions d'énergie des entités énergétiques déterminées peuvent être telles que, pour chaque pas de temps $t$ parmi la pluralité de pas de temps :

$$P_g^{agreg} = \sum_{rdc} \sum_{g} \sum_{i_{g,rdc}} \left[ P_{i_{g,rdc}} + \delta_{i_{g,rdc}}^{+} + \delta_{i_{g,rdc}}^{-} \right]$$

L'optimisation de la fonction objectif peut être une minimisation, et la fonction objectif peut correspondre à la somme, sur tous les pas de temps $t$, des quantités :

$$p = \sum_{rdc} \sum_{g} \sum_{i_{g,rdc}} \left[ \delta_{i_{g,rdc}}^{+} - \delta_{i_{g,rdc}}^{-} \right].$$

Dans ce mode de réalisation, plus la valeur de la fonction objectif calculée pour les valeurs des productions d'énergie des entités énergétiques et de l'au moins une variable d'ajustement déterminées est élevée, plus la qualité du modèle agrégé est mauvaise.

Bien entendu, l'invention ne se limite pas à l'application ci-dessus, et peut être appliquée à tout système énergétique nécessitant une modélisation agrégée.

En particulier, dans des modes de réalisation, les réseaux énergétiques sont des flottes de véhicules électriques, les entités énergétiques sont des batteries électriques, les demandes énergétiques sont des demandes en électricité et les productions d'énergie sont des puissances électriques.

Un autre aspect de l'invention concerne un procédé d'optimisation d'un modèle agrégé décrivant un système énergétique, le système énergétique comprenant une pluralité de réseaux énergétiques, chaque réseau énergétique comprenant une pluralité d'entités énergétiques, chaque entité énergétique étant associée à une production d'énergie respective pour au moins un réseau énergétique, chaque réseau énergétique étant associé à une demande énergétique respective, le procédé comprenant :

- mettre en oeuvre le procédé d'évaluation du modèle agrégé décrivant le système énergétique défini ci-dessus ;

- utiliser les valeurs des productions d'énergie des entités énergétiques et de l'au moins une variable d'ajustement qui optimisent la fonction objectif pour déterminer une relation supplémentaire entre l'au moins une production d'énergie agrégée associée au système énergétique et les productions d'énergie des entités énergétiques pour la pluralité de réseaux énergétiques ;

- mettre à jour le modèle agrégé associé au système énergétique avec la relation supplémentaire déterminée.

La détermination de la relation supplémentaire (i.e. la contrainte locale) peut être faite par un expert, à partir de l'analyse des résultats obtenus lors de la résolution du modèle d'évaluation.

Un autre aspect de l'invention concerne un dispositif d'évaluation d'un modèle agrégé décrivant un système énergétique, le système énergétique comprenant une pluralité de réseaux énergétiques, chaque réseau énergétique comprenant une pluralité d'entités énergétiques, chaque entité énergétique étant associée à une production d'énergie respective pour au moins un réseau énergétique, chaque réseau énergétique étant associé à une demande énergétique respective, le dispositif étant configuré pour mettre en oeuvre le procédé d'évaluation d'un modèle du système énergétique ci-dessus.

Un programme informatique, mettant en oeuvre tout ou partie du procédé décrit ci- avant, installé sur un équipement préexistant, est en lui-même avantageux.

Ainsi, la présente invention vise également un programme informatique comportant des instructions pour la mise en oeuvre de certaines étapes du procédé d'évaluation d'un modèle d'un système énergétique précédemment décrit, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

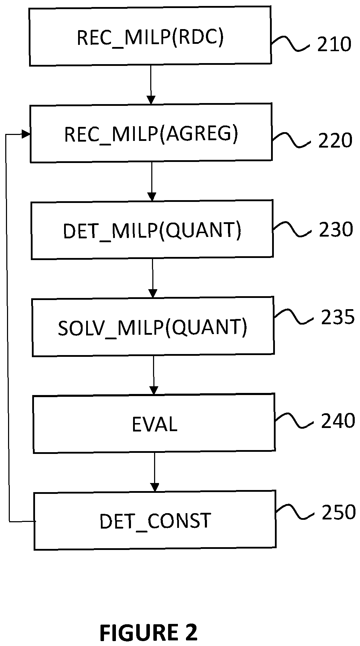

La figure 2 décrite en détail ci-après peut former l'organigramme de l'algorithme général d'un tel programme informatique.

L'invention et ses différentes applications seront mieux comprises à la lecture de la description qui suit et à l'examen des figures qui l'accompagnent.

**BREVE DESCRIPTION DES FIGURES**

D'autres caractéristiques et avantages de l'invention apparaîtront à la lecture de la description, qui peut être lue en regard des figures. Ces figures sont présentées à titre indicatif et ne sont nullement limitatives de l'invention.

[Fig. 1] La Figure 1 illustre un exemple de modélisation agrégée d'une pluralité de réseaux de chaleurs localisés dans différentes zones géographiques, qui elles-mêmes interagissent entre elles par des réseaux électriques.

[Fig. 2] La Figure 2 représente un exemple d'ordinogramme d'un procédé d'évaluation d'un modèle décrivant un système énergétique, selon un mode de réalisation de l'invention.

[Fig. 3] La Figure 3 représente des modèles de réseaux de chaleur et un modèle agrégé.

[Fig. 4] La Figure 4 illustre des profils de production obtenus lors de la résolution d'un modèle agrégé.

[Fig. 5a] La Figure 5a illustre un exemple de variations de la variable pénalité du problème MILP d'évaluation dans le temps dans un mode de réalisation de l'invention.

[Fig. 5b] La Figure 5b représente un exemple de courbes de variation, heure par heure, sur une journée particulière, de la variable pénalité et des variables d'ajustement.

[Fig. 6a] La Figure 6a illustre une amélioration du modèle agrégé avec l'ajout d'une contrainte déterminée à partir du modèle d'évaluation de l'invention.

[Fig. 6b] La Figure 6b représente les courbes de variation, heure par heure, sur une journée particulière, de la variable pénalité et des variables d'ajustement après ajout d'une contrainte déterminée à partir du modèle d'évaluation de l'invention.

[Fig. 7] La Figure 7 représente un dispositif d'évaluation d'un modèle agrégé décrivant un système énergétique, selon un mode de réalisation de l'invention.

## DESCRIPTION DETAILLEE

La présente invention a des applications dans plusieurs domaines nécessitant de simplifier un problème d'optimisation en utilisant des modèles agrégés.

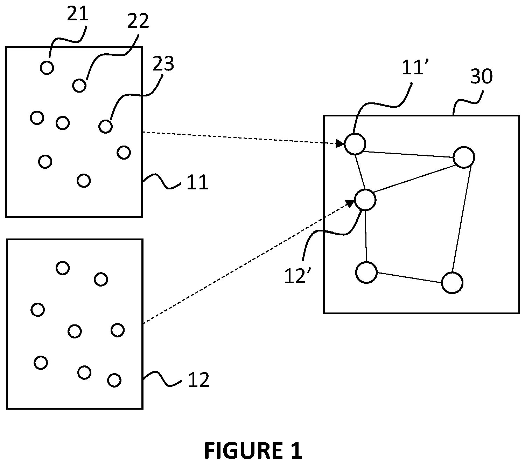

La Figure 1 illustre un exemple d'application pour laquelle la présente invention peut être utilisée. La Figure 1 illustre ainsi un exemple de modélisation agrégée d'une pluralité de réseaux de chaleurs localisés dans différentes zones géographiques.

Par exemple, dans le cadre d'une modélisation d'un système énergétique à l'échelle européenne, les différentes zones géographiques 11, 12 peuvent représenter différents pays d'Europe (comme la France, l'Allemagne, ...). Chaque zone géographique 11, 12 comprend une pluralité respective de réseaux de chaleur 21, 22, 23. Le nombre de réseaux de chaleur 21, 22, 23 peut varier d'une zone géographique 11, 12 à l'autre, et peut aller de plusieurs dizaines à plusieurs centaines, voire plusieurs milliers. A titre d'exemple, en France, on dénombre environ 700 réseaux de chaleur.

Pour modéliser le système énergétique à l'échelle européenne, il est possible, pour chaque zone géographique 11, 12, d'agréger tous les réseaux de chaleur 21, 22, 23 de cette zone géographique 11, 12, pour créer un noeud 11', 12', chaque noeud 11', 12' étant donc associé à une zone géographique respective 11, 12 et représentant les réseaux de chaleur de la zone géographique respective 11, 12. Il est ainsi obtenu un modèle 30 comprenant autant de noeuds 11', 12' que de zones géographiques 11, 12. Les traits reliant les noeuds 11', 12' représentent les infrastructures (typiquement réseaux électriques et gaz) entre les différentes zones géographiques 11, 12.

Dans cet exemple, seuls les réseaux de chaleur sont représentés au sein des zones 11 et 12, mais le modèle énergétique peut intégrer d'autres types de réseaux, par exemple des réseaux d'électricité et/ou de gaz.

Chaque réseau de chaleur 21, 22, 23 est représenté par un modèle respectif qui relie la production de chaleur par le réseau de chaleur avec la demande en chaleur dans le réseau de chaleur. Le modèle peut intégrer d'autres paramètres, comme la capacité de stockage du réseau de chaleur. Par exemple, chaque réseau de chaleur peut être modélisé par un modèle MILP (pour « Mixed-Integer Linear Programming » en anglais, ou « programmation linéaire partiellement en nombres entiers » en français). Ce type de modèle repose sur une optimisation d'une fonction de coût avec des contraintes linéaires et dans lequel et dans lequel une partie des variables sont des variables entières.

Pour chaque réseau de chaleur, le modèle MILP associé permet de résoudre un problème d'optimisation au sein du réseau de chaleur entre la production de chaleur et la demande en chaleur. Dans l'invention, le modèle MILP est supposé connu pour chaque réseau de chaleur.

Comme mentionné ci-dessous, l'agrégation des réseaux de chaleur 21, 22, 23 par zone géographique 11, 12 est nécessaire pour rendre le problème d'optimisation du système énergétique à l'échelle de plusieurs zones géographiques 11, 12 résoluble.

Pour effectuer l'agrégation des $N_{rdc}$ réseaux de chaleur 21, 22, 23 d'une zone géographique 11, 12 donnée :

- les $N_{rdc}$ demandes en chaleur des $N_{rdc}$ réseaux de chaleur sont représentées par une seule demande en chaleur ;

- les $N_{rdc}$ centrales de production de chaleur des $N_{rdc}$ réseaux de chaleur sont représentées par une seule centrale de production de chaleur ;

- les $N_{rdc}$ capacités de stockage (le cas échéant) en chaleur des $N_{rdc}$ réseaux de chaleur sont représentées par une seule capacité de stockage.

L'objectif est ainsi de représenter l'ensemble des $N_{rdc}$ réseaux de chaleur, modélisés par $N_{rdc}$ modèles MILP respectifs, par un seul modèle d'optimisation MILP agrégé.

L'invention vise à évaluer un modèle MILP agrégé par rapport à un ensemble de contraintes physiques inhérentes aux réseaux de chaleur considérés (notamment les contraintes inhérentes aux réseaux de chaleur, comme l'absence d'interconnexion), grâce à des variables d'ajustement, ou variables « slack » en anglais. La variation temporelle de ces variables slack indiquent en outre quelles sont les variables, dans le modèle MILP agrégé, qui ne sont pas correctement décrites. Une étude par un expert de ces variables peut ensuite permettre de déterminer des contraintes qui sont ensuite réinjectées dans le modèle agrégé, et ainsi d'obtenir un modèle MILP agrégé mis à jour, qui soit plus fidèle à la réalité physique, et qui pourra à son tour être lui-même évalué et éventuellement mis à jour par la même stratégie.

Il est noté que la Figure 1 représente un exemple d'application parmi d'autres. L'invention peut s'appliquer à tout système impliquant une pluralité d'entités réparties en plusieurs groupes. Par exemple, l'invention peut s'appliquer à une modélisation d'un parc de véhicules électriques par un modèle de batterie électrique équivalente (agrégée).

La Figure 2 représente un exemple d'ordinogramme d'un procédé d'évaluation d'un modèle décrivant un système énergétique, selon un mode de réalisation de l'invention.

Le système énergétique comprend une pluralité d'entités énergétiques. Par souci de simplification, la Figure 2 est décrite dans le cas où les entités énergétiques sont des réseaux de chaleur, mais il est entendu que l'invention peut être appliquée à tout type d'entité énergétique, notamment des batteries de véhicules électriques.

Lors d'une étape 210, une pluralité de modèles MILP sont reçus, chaque modèle MILP étant associé à un réseau de chaleur respectif et représentant un lien entre une demande en chaleur d'un réseau de chaleur et une capacité de production en chaleur du réseau de chaleur.

Par exemple, la pluralité des $N_{rdc}$ ($N_{rdc}$ étant un entier naturel non nul) réseaux de chaleur peut comprendre une pluralité de générateurs thermiques, chaque générateur thermique étant associé à un certain type $g_1, g_2, ..., g_G$. Par exemple, des types de générateurs thermiques peuvent être : pompe à chaleur, chaudière électrique, chaudière biomasse, etc.

Chaque réseau de chaleur rdc comprend un nombre $G_{i,rdc}$ de générateurs thermiques de type $g_i$, où $G_{i,rdc}$ est un entier naturel (qui peut être nul).

Le modèle MILP associé à chaque réseau de chaleur rdc peut être associé au problème d'optimisation suivant :

$$\forall t, \forall rdc, D_{rdc}[t] = \sum_{g} \sum_{i_{g,rdc}} P_{i_{g,rdc}}[t] \qquad (1)$$

$$\forall t, \forall rdc, \forall g, \forall i_{g,rdc}, P_{i_{g,rdc}}[t] \leq P_{g,rdc}^{max} \qquad (2)$$

$$\forall t, \forall rdc, \forall g, \forall i_{g,rdc}, P_{i_{g,rdc}}[t] \geq b_{i_{g,rdc}}^{on} \cdot P_{g,rdc}^{min} \qquad (3)$$

où :

- *rdc* désigne un réseau de chaleur parmi l'ensemble des $N_{rdc}$ réseaux de chaleurs,

- $g \in \{g_1, g_2, ..., g_G\}$ désigne un type de générateur thermique,

- $i_{g,rdc}$ désigne l'indice de l'unité de production *i* du générateur thermique *g* dans le réseau *rdc,*

- $P_{i_{g,rdc}}[t]$ désigne la puissance thermique envoyée par l'unité de production *i* du générateur thermique *g* du réseau *rdc* à l'instant *t,*

- $D_{rdc}[t]$ désigne la demande en chaleur du réseau *rdc* à l'instant *t,*

- $P_{g,rdc}^{max}$ désigne la puissance nominale du générateur thermique *g* dans le réseau *rdc,*

- $P_{g,rdc}^{min}$ désigne la puissance minimale du générateur thermique *g* dans le réseau *rdc,*

- $b_{i_{g,rdc}}^{on}$ désigne une variable binaire indiquant si l'unité de production $i$ du générateur thermique $g$ du réseau $rdc$ est en fonctionnement ou non.

$t$ représente le temps, qui est généralement une variable discrète. Par exemple $t \in \{t_1, t_2, \dots \}$ où deux instants successifs $t_i$, $t_{i+1}$ peuvent être séparés par un pas de temps constant, par exemple 1 heure.

L'équation (1) ci-dessus traduit le fait qu'à chaque instant $t$, la demande en chaleur dans le réseau $rdc$ est égale à la somme de toutes les puissances thermiques envoyées par toutes les unités de production $i$ de tous les générateurs thermiques $g$ du réseau $rdc$. En d'autres termes, l'équation (1) ci-dessus traduit un équilibre entre la demande en chaleur du réseau $rdc$ et la capacité de production de chaleur du réseau de chaleur $rdc$.

L'équation (2) traduit le fait que, pour chaque unité de production $i$ de chaque générateur thermique $g$ de chaque réseau de chaleur $rdc$, la puissance thermique envoyée à chaque instant $t$ est inférieure ou égale à la puissance nominale (puissance maximale) du générateur $g$. L'équation (3) traduit le fait que, pour chaque unité de production $i$ de chaque générateur thermique $g$ de chaque réseau de chaleur $rdc$, la puissance thermique envoyée à chaque instant $t$ est, lorsque l'unité de production $i$ est en fonctionnement, supérieure ou égale à la puissance minimale du générateur $g$ (qui peut être égal par exemple au minimum de toutes les puissances associées aux différentes unités de production $i$ du générateur thermique $g$).

Il est noté que les équations (1)-(3) représentent un modèle MILP du réseau $rdc$ « simple », dans lequel on cherche à obtenir un équilibre entre l'offre et la demande en chaleur, sans contraintes supplémentaires (rampes, temps minimal pendant lequel un générateur est allumé ou éteint, etc.). Il est noté que d'autres modèles, plus complexes et intégrant des contraintes supplémentaires, peuvent être utilisés. L'exemple de modèle MILP (1)-(3) indiqué ci-dessus est fourni pour montrer qu'un tel modèle est toujours disponible.

De retour à la Figure 2, à l'étape 220, un modèle MILP agrégé représentant l'ensemble des $N_{rdc}$ réseaux de chaleur $rdc$ est obtenu.

Dans le modèle MILP agrégé, les $N_{rdc}$ réseaux de chaleurs sont regroupés en un seul réseau agrégé associé à une demande en chaleur agrégée $D^{agreg}$, une énergie $E^{agreg}$ contenue dans le stockage du réseau agrégé et un ensemble de puissance $P_g^{agreg}$ représentant les puissances thermiques des générateurs de type $g$ agrégés.

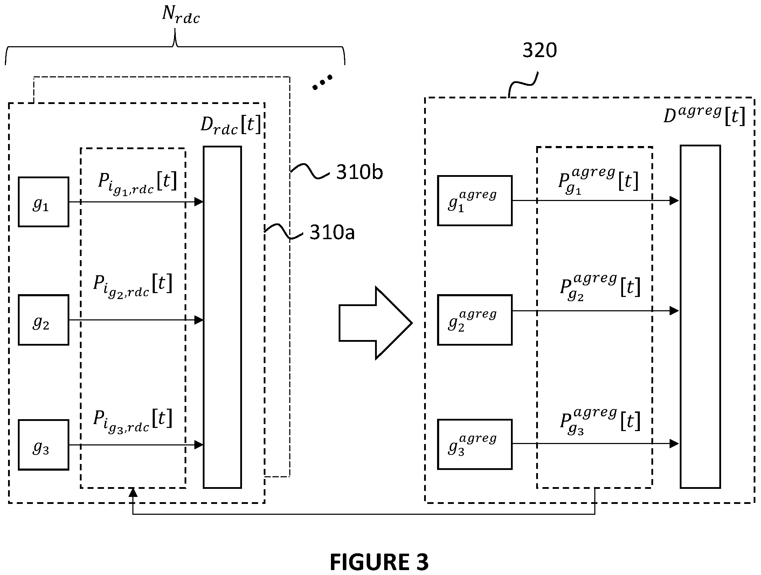

Une représentation des modèles MILP des réseaux de chaleur et du modèle MILP agrégé est fourni à la Figure 3. Chaque modèle MILP 310a, 310b est associé à un réseau de chaleur respectif. Sur l'exemple de la Figure 3, les différents types de générateurs thermiques sont notés $g_1$, $g_2$, $g_3$. Il est supposé qu'il y a $G_{i,rdc}$ générateurs de type $g_i$ dans le réseau $rdc$.

Le modèle MILP 310a, 310b modélise le lien entre les puissances thermiques $P_{i_{j,rdc}}[t]$ envoyées de l'unité $j$ du générateur $g_j$ du réseau rdc à chaque instant $t$ et la demande en chaleur $D_{rdc}[t]$ du réseau $rdc$ à chaque instant $t$.

Les $N_{rdc}$ modèles MILP 310a, 310b sont agrégés en un modèle MILP agrégé 320. Dans ce modèle agrégé 320, les générateurs de type $g_j$ de tous les réseaux de chaleur sont regroupés en une ou plusieurs unités d'un générateur agrégé de type $g_j$, noté $g_j^{agreg}$, chacun associé à une puissance thermique agrégée $P_{g_j}^{agreg}[t]$, et la demande en chaleur $D^{agreg}[t]$ du réseau agrégé à chaque instant $t$ est déterminée à partir des $N_{rdc}$ demandes en chaleur $D_{rdc}[t]$ des différents réseaux $rdc$ à chaque instant $t$. Par exemple, la demande en chaleur $D^{agreg}[t]$ du réseau agrégé est égale à la somme des $N_{rdc}$ demandes en chaleur $D_{rdc}[t]$ des différents réseaux $rdc$.

Dans l'idéal, le modèle MILP agrégé représente parfaitement tous les réseaux de chaleur modélisés. Ainsi, la puissance agrégée peut être distribuée sur tous les générateurs $g$ de tous les réseaux $rdc$. En d'autres termes, si on ne tient pas compte des contraintes locales, la puissance agrégée $P_g^{agreg}[t]$ de chaque générateur de type $g$ agrégé à tout instant $t$ peut s'écrire :

$$\forall t, \forall g, P_g^{agreg}[t] = \sum_{rdc} \sum_{g} \sum_{i_{g,rdc}} P_{i_{g,rdc}}[t] \qquad (4)$$

Toutefois, en pratique, l'égalité (4) ne peut pas être vérifiée du fait des contraintes locales existantes. Pour cette raison, lors d'une étape 230, un modèle d'évaluation est introduit, pour tenir compte de ces contraintes locales. Ainsi, lors de l'étape 230, un modèle MILP dit « modèle d'évaluation » ou « modèle MILP d'évaluation » est construit. Ce modèle regroupe un nombre plus restreint $N_{eval} < N_{rdc}$ de réseaux de chaleur afin de trouver une décomposition de la puissance agrégée $P_g^{agreg}[t]$ en plusieurs générateurs locaux $i_{g,rdc}$ de chaque réseau de chaleur $rdc$, et respectant certaines contraintes locales : la demande locale en chaleur $D_{rdc}$ et des contraintes techniques sur les générateurs locaux $i_{g,rdc}$.

Le modèle MILP d'évaluation peut ainsi s'écrire (avec les variables en gras représentant des variables d'optimisation) :

$$\forall t, \forall rdc, D_{rdc}[t] = \sum_{g} \sum_{i_{g,rdc}} \boldsymbol{P}_{\boldsymbol{i}_{g,rdc}}[\boldsymbol{t}] \tag{1}$$

$$\forall t, \forall rdc, \forall g, \forall i_{g,rdc}, \boldsymbol{P}_{\boldsymbol{i}_{g,rdc}}[\boldsymbol{t}] \leq P_{g,rdc}^{max} \tag{2}$$

$$\forall t, \forall rdc, \forall g, \forall i_{g,rdc}, \boldsymbol{P}_{\boldsymbol{i}_{g,rdc}}[\boldsymbol{t}] \geq \boldsymbol{b}_{\boldsymbol{i}_{g,rdc}}^{\boldsymbol{on}} \cdot P_{g,rdc}^{min} \tag{3}$$

$$\forall t, \forall g, P_g^{agreg}[t] = \sum_{rdc} \sum_{g} \sum_{i_{g,rdc}} \left( \boldsymbol{P}_{\boldsymbol{i}_{g,rdc}}[\boldsymbol{t}] + \boldsymbol{\delta}_{\boldsymbol{i}_{g,rdc}}^{+}[\boldsymbol{t}] + \boldsymbol{\delta}_{\boldsymbol{i}_{g,rdc}}^{-}[\boldsymbol{t}] \right) \tag{4'}$$

où $\boldsymbol{\delta}_{\boldsymbol{i}_{g,rdc}}^{+}[\boldsymbol{t}]$ désigne une variable d'ajustement, ou variable « slack », positive, $\boldsymbol{\delta}_{\boldsymbol{i}_{g,rdc}}^{-}[\boldsymbol{t}]$ désigne une variable slack négative. $\boldsymbol{\delta}_{\boldsymbol{i}_{g,rdc}}^{+}[\boldsymbol{t}]$ prend des valeurs réelles positives ou nulles et $\boldsymbol{\delta}_{\boldsymbol{i}_{g,rdc}}^{-}[\boldsymbol{t}]$ prend des valeurs négatives ou nulles.

Comme mentionné ci-dessus, les équations (1)-(3) ci-dessus sont fournies à titre d'exemple et représentent un modèle « simple », mais d'autres contraintes peuvent être introduites dans le modèle ci-dessus.

L'objectif est de rechercher une décomposition de la puissance d'un générateur agrégé $P_g^{agreg}$ en une somme de puissances de générateurs locaux (réellement présents sur les réseaux de chaleur) $\boldsymbol{P}_{i,grdc}$ (équation 4, transformée en 4' pour tenir compte du fait qu'une décomposition « parfaite » n'est pas toujours possible), et qui respectent un ensemble de contraintes locales : contraintes techniques sur les générateurs (puissance maximale par l'équation 2, puissance minimale par l'équation 3) et contrainte de satisfaction de la demande en chaleur à l'échelle locale (équation 1).

A partir des variables slack $\boldsymbol{\delta}_{\boldsymbol{i}_{g,rdc}}^{+}[\boldsymbol{t}], \boldsymbol{\delta}_{\boldsymbol{i}_{g,rdc}}^{-}[\boldsymbol{t}]$, il est possible de définir une fonction « pénalité » p[t] qui représente la somme des pénalités, c'est-à-dire la somme des écarts entre le modèle agrégé et les contraintes locales à chaque instant :

$$\forall t, \boldsymbol{p}[\boldsymbol{t}] = \sum_{rdc} \sum_{g} \sum_{i_{g,rdc}} \left( \boldsymbol{\delta}_{\boldsymbol{i}_{g,rdc}}^{+}[\boldsymbol{t}] - \boldsymbol{\delta}_{\boldsymbol{i}_{g,rdc}}^{-}[\boldsymbol{t}] \right) \tag{5}$$

Le problème d'optimisation à résoudre est un problème de minimisation de la fonction pénalité, c'est-à-dire que le problème d'optimisation est associé à la fonction objectif :

$$f_{obj} = \min \sum_{t} \boldsymbol{p}[\boldsymbol{t}]$$

Les variables slack $\boldsymbol{\delta}_{\boldsymbol{i}_{g,rdc}}^{+}[\boldsymbol{t}], \boldsymbol{\delta}_{\boldsymbol{i}_{g,rdc}}^{-}[\boldsymbol{t}]$ sont introduites pour que le problème d'optimisation ci-dessus ait toujours une solution. Ces variables slack quantifient un écart et un ajustement de puissance sur les puissances agrégées afin que les contraintes locales (1), (2) et (3) puissent être respectées

La quantité $\boldsymbol{\delta}_{\boldsymbol{i}_{g,rdc}}^{+}$ correspond à un écart positif : la puissance agrégée, issue du modèle MILP agrégé, est trop importante pour que des contraintes locales soient respectées (par exemple maximum de puissance). Dans ce cas, une quantité positive est ajoutée à la puissance locale (qui est soumis à une puissance maximale) afin d'obtenir la quantité $P_g^{agreg}$.

A l'inverse, la quantité $\delta_{i_{g,rdc}}^-$ correspond à un écart négatif, par exemple dans le cas d'un puissance minimale locale supérieure à la puissance agrégée imposée : dans ce cas, la quantité adéquate est retranchée à la puissance locale pour obtenir la quantité agrégée imposée.

Les variables en gras dans les équations ci-dessus correspondent aux variables d'optimisation, c'est-à-dire les variables dont on détermine les valeurs lors de l'optimisation. Ainsi, le problème d'optimisation ci-dessus revient à déterminer, pour des valeurs $D_{rdc}[t]$, $P_{g,rdc}^{max}$, $P_{g,rdc}^{min}$ et $P_g^{agreg}[t]$ fixées, les valeurs des variables $\boldsymbol{P}_{i_{g,rdc}}[\boldsymbol{t}]$, $\boldsymbol{b}_{i_{g,rdc}}^{on}$, $\boldsymbol{\delta}_{i_{g,rdc}}^+[\boldsymbol{t}]$ et $\boldsymbol{\delta}_{i_{g,rdc}}^-[\boldsymbol{t}]$.

Ce problème d'optimisation est donc résolu, à l'étape 235 de la Figure 2, sur un nombre $N_{eval}$ de réseaux de chaleur plus faible que le nombre total $N_{rdc}$ de réseaux de chaleur. Par exemple, le nombre $N_{eval}$ peut être de l'ordre de quelques unités à quelques dizaines, préférentiellement de l'ordre de la dizaine (par exemple entre 3 et 10). Cela permet de pouvoir obtenir rapidement une solution au problème et pouvoir tirer des conclusions. Si un nombre trop important de réseaux à agréger est choisi, le risque est d'avoir une convergence longue vers une solution, voire pas de convergence du tout. L'objectif ici est de quantifier des infaisabilités qui découlent de la formulation agrégée, et ces infaisabilités existent déjà pour un petit nombre de réseau.

Lors d'une étape 240, les solutions obtenues à l'étape 235, en particulier la variation temporelle des variables slack, sont analysées pour chaque pas de temps. Des valeurs non nulles des variables slack traduisent un ajustement des puissances agrégées pour que les contraintes locales soient respectées. En d'autres termes, lorsque les variables slack sont non nulles, cela signifie que le modèle agrégé n'est pas compatible avec les contraintes locales, issues des modèles obtenus à l'étape 210. Ainsi, à l'étape 240, l'analyse des variables slack permet d'évaluer si le modèle agrégé est compatible avec les contraintes locales (et donc les contraintes physiques à l'échelle des réseaux de chaleur) ou si, au contraire, il n'est pas réalisable en pratique. L'avantage est que ces variables slack sont associées à un type de générateur, permettant une analyse fine.

La valeur de la fonction objectif du problème d'optimisation associé au modèle MILP d'évaluation peut être ainsi vue comme un quantificateur de la qualité de la solution agrégée obtenue (et donc du modèle agrégé) :

- si la fonction objectif est nulle ($\Sigma_t \boldsymbol{p}[t] = 0$), cela signifie que les solutions du modèle agrégé (demande agrégée et puissances des générateurs agrégés) se décomposent parfaitement dans les $N_{eval}$ réseaux de chaleur considérés. Cela veut donc dire que le modèle MILP agrégé décrit de manière correcte le comportement des $N_{eval}$ réseaux de chaleur ;

- si cette fonction objectif n'est pas nulle, cela veut dire qu'il n'existe pas de décomposition de la puissance des générateurs agrégés dans les réseaux de chaleurs, respectant les contraintes locales (Puissance minimale, puissance maximale et/ou demande locale). La valeur de la fonction objective correspond alors à l'écart entre une solution faisable et la solution agrégée testée.

En outre, sur les pas de temps sur lesquels la ou les variables slack sont non nulles, une analyse spécifique du comportement du problème agrégé peut être réalisée, dans le but d'établir de nouvelles contraintes à ajouter dans le problème d'optimisation agrégé.

Ainsi, à l'étape 250, un expert peut déterminer une ou plusieurs nouvelles contraintes en analysant plus finement les pas de temps sur lesquels les variables slack prennent des valeurs non nulles. Cette analyse peut être en outre réalisée à partir de vraies données de fonctionnement des réseaux de chaleur, par exemple les valeurs effectives des puissances $P_{i_{g,rdc}}[t]$ lors des pas de temps analysés (données historiques de fonctionnement).

Ces contraintes, obtenues à partir d'un nombre restreint $N_{eval}$ de réseaux de chaleur, peuvent ensuite être réinjectées dans le modèle MILP agrégé, pour obtenir un modèle MILP agrégé amélioré (flèche reliant l'étape 250 à l'étape 220 sur la Figure 2). Il est en effet noté que, même si les contraintes sont déterminées à partir de l'analyse d'un nombre restreint de réseaux de chaleurs, elles sont valables de manière générale, sur l'ensemble des réseaux de chaleur. Les nouvelles contraintes déterminées peuvent donc être ajoutées au modèle agrégé, qui peut être résolu sur un grand nombre de réseaux de chaleur.

Il est ainsi possible d'itérer entre le problème agrégé, le problème MILP de qualification de solution et la détection/ajout de contraintes pour améliorer le modèle agrégé, et se rapprocher d'une modélisation non agrégée, plus conforme à la réalité physique.

Il est noté que la modélisation d'un système énergétique est utile, par exemple, pour déterminer une répartition de la production d'énergie entre différents générateurs d'énergie du système énergétique. Par exemple, un modèle MILP agrégé de la pluralité de réseaux de chaleur sur un territoire géographique (par exemple à l'échelle d'un pays) permet ainsi de déterminer, en fonction des demandes énergétiques, des capacités de stockage et de production des différents générateurs présents sur le territoire, une répartition optimale de la production d'énergie entre les différents générateurs. Plus le modèle MILP agrégé est proche des modèles MILP locaux, plus la répartition obtenue est applicable dans la réalité.

L'invention est maintenant illustrée par un exemple d'application dans lequel le système énergétique comprend trois réseaux de chaleur notés H1, H2 et H3. Ces trois réseaux de chaleur correspondent respectivement à trois villes : Strasbourg, Bordeaux et Montpellier. Il est supposé que chaque réseau de chaleur H1, H2, H3 est composé de trois pompes à chaleur (PAC), deux chaudières électriques (PtH), deux centrales biomasse (BIO) et un stockage de chaleur sensible, dont les caractéristiques sont présentées dans le tableau ci-dessous :

|  | Réseau H1 | Réseau H2 | Réseau H3 |
|---|---|---|---|
| **Pompes à chaleur (PAC)** | | | |
| Nombre de PAC | 3 | 3 | 3 |
| Pmax PAC [MW] | 20 | 15 | 10 |
| Pmin PAC [MW] | 4 | 3 | 2 |
| Efficacité PAC [-] | 3.5 | 3.6 | 3.6 |
| **Chaudières électriques (PtH)** | | | |
| Nombre de PtH | 2 | 2 | 2 |
| Pmax PtH [MW] | 40 | 40 | 40 |
| Pmin PtH [MW] | 2 | 2 | 2 |
| Efficacité PtH [-] | 0.99 | 0.99 | 0.99 |
| **Chaudières biomasse (BIO)** | | | |
| Nombre de bio | 2 | 2 | 2 |
| Pmax bio [MW] | 75 | 60 | 45 |
| Pmin bio [MW] | 30 | 24 | 18 |
| Efficacité BIO [-] | 0.97 | 0.96 | 0.95 |
| **Stockage de chaleur sensible (STO)** | | | |
| Energie max [MWh] | 200 | 180 | 150 |
| Pmax [MW] | 10 | 9 | 8 |

Dans le tableau ci-dessus, Pmax désigne la puissance nominale en mégawatts (MW), Pmin la puissance minimale en mégawatts (MW), l'efficacité d'une PAC est définie par son coefficient de performance (COP), qui correspond au rapport entre l'énergie utile (chaleur restituée pour le chauffage) et l'énergie consommée pour faire fonctionner la PAC, et l'efficacité d'une PtH ou d'une BIO est définie par son rendement, i.e. le rapport entre la chaleur produite et l'énergie consommée pour assurer cette production. « Energie max » représente l'énergie maximale stockée, exprimée en mégawattheures.

Dans cet exemple, il est choisi un modèle agrégé dans lequel les centrales de production sont agrégées par technologie, dont le paramétrage de type « intensif » correspond au paramétrage moyen du réseau H2. Ainsi, il est considéré que le modèle agrégé comprend 9 unités de générateur PAC « agrégée » de type H2, 6 unités de générateur PtH « agrégée » de type H2 et 6 unités de générateur BIO « agrégée » de type H2. La demande agrégée correspond à la somme des demandes des trois réseaux H1, H2, H3 et le stockage agrégé correspond à la somme des stockages des trois réseaux H1, H2 et H3. Les valeurs ainsi obtenues sont présentées dans le tableau ci-dessous :

| **Demande agrégée** | Somme des 3 demandes |
|---|---|
| **PAC agrégée** | Pmin : 3 MW |

(suite)

| Demande agrégée | Somme des 3 demandes |
|---|---|
| | Pmax : 15 MW |
| PtH agrégée | Pmin : 2 MW |
| | Pmax : 40 MW |
| BIO agrégée | Pmin : 24 MW |
| | Pmax : 60 MW |
| STO agrégée | Emax : 530 MWh |
| | Pmax : 27 MW |

Il est entendu que d'autres paramétrages pourraient être utilisés pour le modèle agrégé.

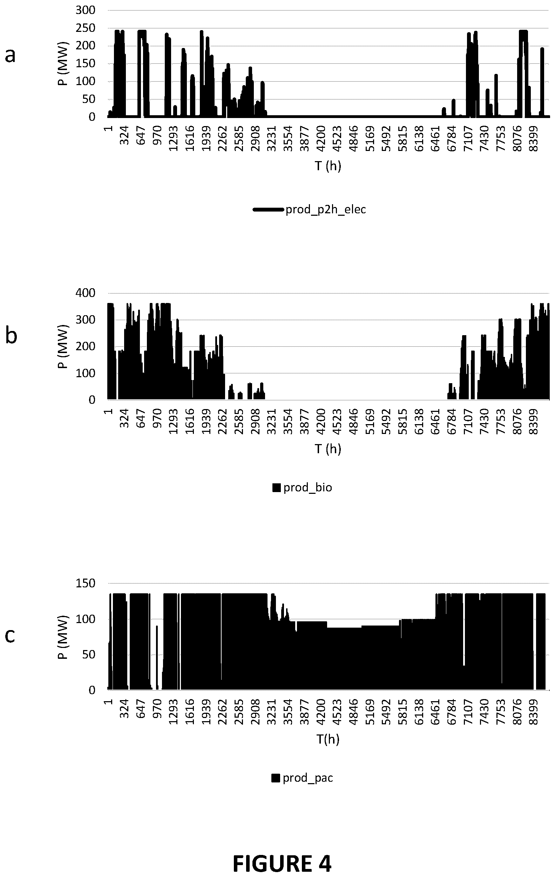

La résolution du modèle agrégé ci-dessus est ensuite mise en oeuvre, et les profils de production des générateurs agrégés permettant de minimiser la fonction de coût associée au problème d'optimisation sont déterminés. La Figure 4 illustre certains profils de production ainsi obtenus. En particulier, la Figure 4a représente le profil de production obtenu pour la chaudière électrique agrégée la Figure 4b représente le profil de production obtenu pour la chaudière biomasse agrégée et la Figure 4c représente le profil de production obtenu par la pompe à chaleur agrégée. Ces profils correspondent à la production heure par heure, en mégawatts, de chaque générateur agrégé pour obtenir la demande de chaleur agrégée.

Ces résultats ne permettent pas d'établir directement s'ils sont physiquement réalisables à l'échelle locale des réseaux de chaleur indépendants. C'est pourquoi l'invention propose de réinjecter les profils de production obtenus dans le modèle MILP d'évaluation, et d'analyser les valeurs de la variable pénalité dans le temps.

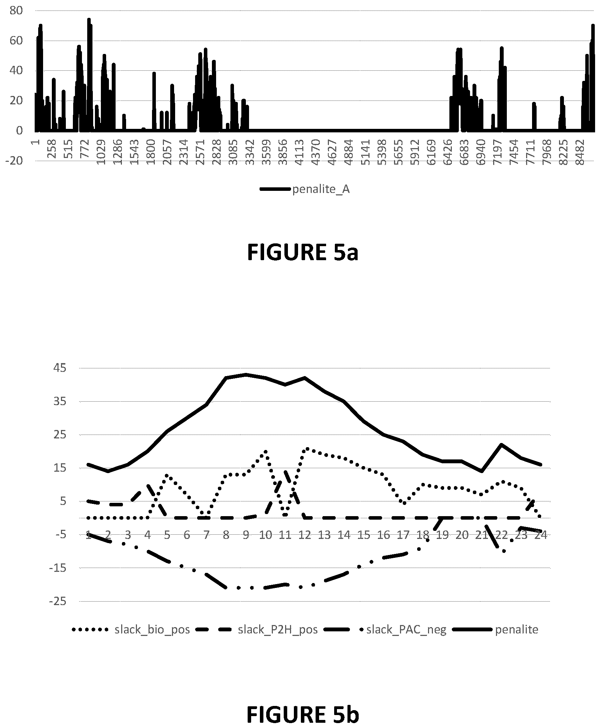

La Figure 5a représente les variations de la variable pénalité du problème MILP d'évaluation dans le temps. La Figure 5b représente les variations de plusieurs variables slack et de la variable pénalité (somme des variables slack) sur une journée particulière.

Sur la Figure 5a, chaque « pic » de la courbe représente un pas de temps sur lequel la variable pénalité a une valeur qui correspond à un maximum local et représente donc un problème d'adéquation entre le modèle agrégé et les contraintes physiques des différents générateurs. Par exemple, la courbe de la variable pénalité présente un pic à la valeur t = 2500 h, qui correspond à une journée particulière, représentée plus en détail sur la Figure 5b.

La Figure 5b représente ainsi les courbes de variation, heure par heure, sur une journée particulière, de la variable pénalité (en trait plein), de la variable slack positive associée à la chaudière biomasse agrégée (en pointillés), de la variable slack positive associée à la chaudière électrique agrégée (en tirets), et de la variable slack négative associée à la pompe à chaleur agrégée (en tirets séparés par des points).

Il ressort de la Figure 5b que :

- la variable slack positive associée à la chaudière biomasse agrégée prend des valeurs qui sont strictement positives sur quasiment tous les pas de temps de la journée étudiée ;

- la variable slack positive associée à la chaudière électrique agrégée prend des valeurs qui sont strictement positives sur certains pas de temps pendant la journée étudiée ; et

- la variable slack négative associée à la pompe à chaleur agrégée prend des valeurs qui sont strictement négatives uniquement sur certains pas de temps de la journée étudiée (et nulles le reste du temps).

Cela signifie que les pompes à chaleur sont privilégiées, dans le modèle agrégé, en raison de leur efficacité, et que certaines pompes à chaleur d'un réseau alimentent en fait, selon le modèle agrégé, un autre réseau (ce qui est physiquement impossible), au détriment des chaudières biomasses et électriques.

En analysant la solution du problème agrégé (représentée à la Figure 4) et des données complémentaires relatives aux différents réseaux (notamment les demandes en chaleur le jour considéré), il peut être constaté que le groupe de générateur PAC est à sa puissance maximale, i.e. 135 MW, alors que les demandes en chaleur des trois réseaux sont de respectivement 68 MW, 23 MW et 50 MW. Localement sur le réseau H2, la puissance des PAC est décomposée en $3{\times}15{=}45$ MW ce qui est supérieur à 23+9 MW, c'est-à-dire la demande locale plus la quantité d'énergie stockable sur un pas de temps dans le réseau H2.

Ces informations permettent à un expert d'identifier une contrainte de puissance maximale à ajouter sur le problème agrégé. Cette contrainte consiste à brider la puissance d'un générateur agrégé par rapport à sa puissance maximale localement disponible et la demande thermique locale, en tenant compte d'une quantité d'énergie stockable, ce qui peut se traduire mathématiquement par :

$$\forall g, \forall t, P_g^{max,agrege}[t] \leq \sum_{rdc} \min(N_{g,rdc} \cdot P_g^{max}, D_{rdc}[t]) + P_{sto}^{agreg}[t] \qquad (C1)$$

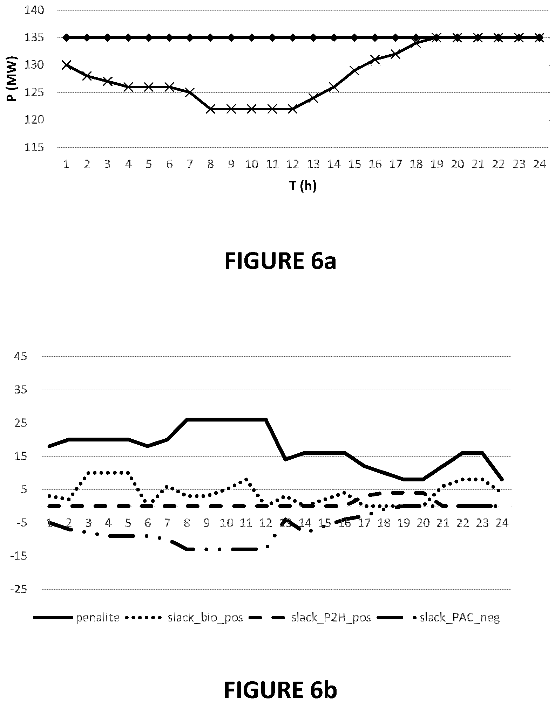

L'ajout de cette nouvelle contrainte dans le modèle MILP agrégé permet d'améliorer ce dernier, en le rendant plus conforme aux contraintes associées aux différents réseaux de chaleur. Cette amélioration peut être constatée sur les Figures 6a et 6b. La Figure 6a représente la variation de puissance du générateur PAC agrégé sur la journée considérée ci-dessus, sans la contrainte C1 (en trait plein avec des points dessus) et avec la contrainte C1 (en trait plein avec des croix dessus). On constate que la puissance n'est plus égale à la puissance maximale sur tous les pas de temps, mais qu'elle fluctue.

La Figure 6b représente les courbes de variation, heure par heure, sur la même journée que sur la Figure 5b, de la variable pénalité (en trait plein), de la variable slack positive associée à la chaudière biomasse agrégée (en pointillés), de la variable slack positive associée à la chaudière électrique agrégée (en tirets), et de la variable slack négative associée à la pompe à chaleur agrégée (en tirets séparés par des points), après l'ajout de la contrainte C1.

On constate sur la Figure 6b que la valeur de la variable pénalité est globalement plus faible avec ajout de la contrainte C1 dans le modèle, que sur la Figure 5b, ce qui signifie que le modèle agrégé avec la nouvelle contrainte C1 permet une meilleure représentation des contraintes physiques inhérentes aux différents réseaux de chaleur.

Il peut aussi être constaté sur la Figure 6b que les valeurs des variables slack sont globalement plus proches de zéro que sur la Figure 5b, ce qui illustre également le fait que le modèle agrégé intégrant la nouvelle contrainte est ainsi amélioré.

Là encore, l'analyse de la solution du nouveau problème agrégé et de données complémentaires relatives aux différents réseaux peut permettre d'affiner encore le modèle avec de nouvelles contraintes, par exemple une contrainte C2 prenant en compte le comportement du stockage agrégé (et non plus seulement à l'échelle locale, comme dans C1), ou une contrainte C3 prenant en compte le fait que certains générateurs sont obligatoirement appelés à une échelle locale su la puissance maximale des autres générateurs locaux ne sont pas suffisants pour satisfaire la demande en chaleur locale. De telles contraintes peuvent par exemple s'écrire :

$$\forall g, \forall t, P_g^{agreg}[t] \leq \sum_{rdc} \min(D_{rdc}[t] + P_{sto,rdc}^{max}[t], N_{g,rdc} \cdot P_{g,rdc}^{max}) \qquad (C2)$$

$$\forall g, \forall t, P_g^{agreg}[t] \geq \sum_{rdc} \max\left(D_{rdc[t]} - \left(P_{sto,rdc}^{max} + \sum_{g' \in \mathcal{G} \setminus \{g\}} N_{g',rdc} \cdot P_{g',rdc}^{max}\right), 0\right) \qquad (C3)$$

Plusieurs modèles agrégés ont été comparés, selon qu'ils intègrent ou non certaines contraintes. En particulier, les quatre scénarios suivants (A, B, C, D) ont été comparés :

| | |
|---|---|
| **A** | Sans contraintes supplémentaires |
| **B** | Avec C1 |
| **C** | Avec C1+C2 |
| **D** | Avec C1+C2+C3 |

La qualité des différents modèles est évaluée en comparant les racines carrées de l'erreur quadratique moyenne (RMSE) de la variable pénalité sur les différents pas de temps normalisée par sa valeur maximale.

| | Fobj [MW] | Fobj normalisée | Moyenne des pénalités [MW] | Max des pénalités [MW] | RMSE normalisée |
|---|---|---|---|---|---|
| **A** | 26121 | 100 % | 3 | 74 | 0,2360 |
| **B** | 16093 | 62 % | 1.84 | 56 | 0,2238 |

(suite)

|  | Fobj [MW] | Fobj normalisée | Moyenne des pénalités [MW] | Max des pénalités [MW] | RMSE normalisée |
|---|---|---|---|---|---|
| C | 14801 | 57 % | 1.7 | 56 | 0,2235 |
| D | 14315 | 55 % | 1.64 | 56 | 0,2237 |

Ces résultats permettent de confirmer l'effet de l'ajout des nouvelles contraintes identifiées dans le modèle agrégé : la fonction objectif (i.e. la somme des pénalités) du problème MILP de qualification de solutions diminue de près de 50% grâce à l'ajout des contraintes, et les coûts du système agrégé se rapprochent ainsi des coûts du système non agrégé.

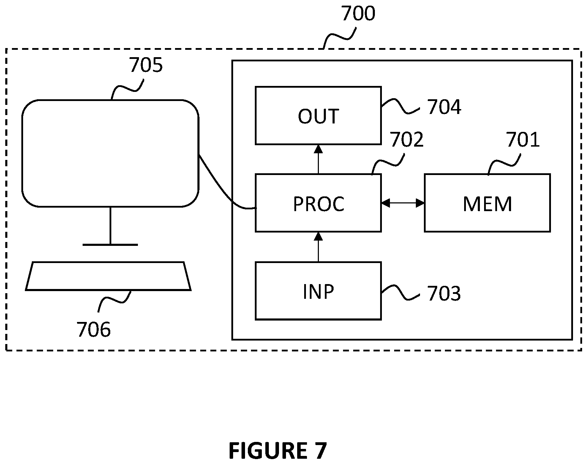

La Figure 7 représente un dispositif d'évaluation d'un modèle agrégé décrivant un système énergétique, selon un ou plusieurs modes de réalisation de l'invention.

Dans ces modes de réalisation, le dispositif comporte un ordinateur 700, comprenant une mémoire 701 pour stocker des instructions permettant la mise en oeuvre du procédé, les paramètres des différents modèles et éventuellement des données de fonctionnement complémentaires, et des données temporaires pour réaliser différentes étapes du procédé décrit précédemment.

L'ordinateur 700 comporte en outre un circuit 702. Ce circuit peut être, par exemple un processeur apte à interpréter des instructions sous la forme de programme informatique, une carte électronique dont les étapes du procédé de l'invention sont décrites dans le silicium, ou encore une puce électronique programmable comme une puce FPGA (pour « Field-Programmable Gate Array » en anglais).

L'ordinateur 700 comporte une interface d'entrée 703 pour la réception de différents modèles MILP associée aux différents réseaux électriques et d'un modèle MILP agrégé, et une interface de sortie 704 pour la fourniture des valeurs des variables slack. Enfin, l'ordinateur peut comporter, pour permettre une interaction aisée avec un utilisateur, un écran 705 et un clavier 706. Bien entendu, le clavier est facultatif, notamment dans le cadre d'un ordinateur ayant la forme d'une tablette tactile, par exemple.

Par ailleurs, le schéma fonctionnel présenté sur la figure 2 est un exemple typique d'un programme dont certaines instructions peuvent être réalisées auprès du dispositif décrit. À ce titre, la figure 2 peut correspondre à l'organigramme de l'algorithme général d'un programme informatique au sens de l'invention.

Bien entendu, la présente invention ne se limite pas aux formes de réalisation décrites ci-avant à titre d'exemples. Elle s'étend à d'autres variantes et d'autres applications. Par exemple, comme mentionné plus haut, l'invention peut être appliquée à d'autres systèmes énergétiques, comme des flottes de véhicules électriques et l'utilisation de batteries individuelles pour des services au réseau électrique. Le nombre important de véhicules électriques rend le problème complexe. Pour cette raison, le parc de véhicules électriques peut être modélisé par un modèle de batterie équivalente, avec des profils de charge et de décharge maximaux et minimaux, fonction du comportement de chaque batterie individuelle. Le procédé décrit ci-dessus permet notamment de valider la modélisation d'une batterie agrégée ou, le cas échéant, de quantifier les écarts de solutions entre une modélisation de batterie agrégée et des batteries individuelles.

**Revendications**

1. Procédé, mis en oeuvre par ordinateur, d'évaluation d'un modèle agrégé décrivant un système énergétique, le système énergétique comprenant une pluralité de réseaux énergétiques (21, 22, 23), chaque réseau énergétique comprenant une pluralité d'entités énergétiques, chaque entité énergétique étant associée à une production d'énergie respective pour au moins un réseau énergétique, chaque réseau énergétique étant associé à une demande énergétique respective, le procédé comprenant :

   - pour chaque réseau énergétique de la pluralité de réseaux énergétiques (21, 22, 23), recevoir (210) un modèle (310a, 310b) respectif associé audit réseau énergétique, ledit modèle décrivant une relation entre une demande énergétique dudit réseau énergétique et les productions d'énergie des entités énergétiques pour ledit réseau énergétique ;
   - recevoir (220) le modèle agrégé (320) associé au système énergétique, le modèle agrégé comprenant au moins une relation entre au moins une production d'énergie agrégée associée au système énergétique et les productions d'énergie des entités énergétiques ;
   - construire (230) un modèle d'évaluation du modèle agrégé à partir :

      des relations entre les demandes énergétiques et les productions d'énergie des entités énergétiques pour la pluralité de réseaux énergétiques (21, 22, 23) ;
de l'au moins une relation entre l'au moins une production d'énergie agrégée associée au système énergétique et les productions d'énergie des entités
énergétiques pour la pluralité de réseaux énergétiques (21, 22, 23) ;

ledit modèle d'évaluation intégrant au moins une variable d'ajustement représentant un écart entre l'au moins une production d'énergie agrégée associée au système énergétique et les productions d'énergie des entités énergétiques ;
ledit modèle d'évaluation étant associé à une fonction objectif dépendant de l'au moins une variable d'ajustement ;

- pour un sous-ensemble de réseaux énergétiques parmi la pluralité de réseaux énergétiques (21, 22, 23), recevoir :

pour chaque réseau énergétique du sous-ensemble de réseaux énergétiques,
une valeur de demande énergétique respective associée audit chaque réseau énergétique ;
au moins une valeur de production d'énergie agrégée associée au sous-ensemble de réseaux énergétiques ;

- déterminer (235), à partir des valeurs reçues de demandes énergétiques et de production d'énergie agrégée, des valeurs des productions d'énergie des entités énergétiques et de l'au moins une variable d'ajustement qui optimisent la fonction objectif ;
- évaluer (240) une qualité du modèle agrégé à partir d'une valeur de la fonction objectif calculée pour les valeurs des productions d'énergie des entités énergétiques et de l'au moins une variable d'ajustement déterminées.

2. Procédé selon la revendication 1, dans lequel les modèles (310a, 310b) associés à la pluralité de réseaux énergétiques (21, 22, 23), le modèle agrégé (320) et le modèle d'évaluation sont des modèles MILP.

3. Procédé selon la revendication 1 ou 2, dans lequel les réseaux énergétiques (21, 22, 23) sont des réseaux de chaleur, les entités énergétiques sont des entités génératrices de chaleur, les demandes énergétiques sont des demandes en chaleur et les productions d'énergie sont des puissances thermiques.

4. Procédé selon la revendication 3, dans lequel chaque entité énergétique est associée à un type d'entité parmi un ensemble de types d'entités, dans lequel l'au moins une production d'énergie agrégée associée au système énergétique comprend une production d'énergie agrégée pour chaque type d'entité parmi l'ensemble de types d'entités.

5. Procédé selon la revendication 4, dans lequel, pour chaque réseau énergétique, la relation, dans le modèle (310a, 310b) associé au réseau énergétique, entre la demande énergétique $D_{rdc}$ dudit réseau énergétique et les productions d'énergie $P_{i_{g,rdc}}$ des entités énergétiques $i_{g,rdc}$ pour ledit réseau énergétique $rdc$ est, pour chaque pas de temps $t$ parmi une pluralité de pas de temps :

$$D_{rdc} = \sum_{g} \sum_{i_{g,rdc}} P_{i_{g,rdc}}$$

où $g$ est un indice représentant le type d'entité, et $i_{g,rdc}$ est un indice représentant une entité énergétique de type $g$ dans le réseau énergétique $rdc$.

6. Procédé selon la revendication 5, dans lequel l'au moins une valeur de production d'énergie agrégée associée au sous-ensemble de réseaux énergétiques (21, 22, 23) reçue comprend un ensemble de valeurs de productions d'énergie agrégées $P_g^{agreg}$, chacune étant associée à un type d'entité $g$ respectif parmi l'ensemble de types d'entités ; dans lequel l'au moins une variable d'ajustement comprend, pour chaque entité énergétique $i_{g,rdc}$, une variable d'ajustement positive $\delta_{i_{g,rdc}}^{+}$ respective et une variable d'ajustement négative $\delta_{i_{g,rdc}}^{-}$ respective ; dans lequel, pour chaque réseau énergétique *rdc* et pour chaque pas de temps *t*, les valeurs $P_{i_{g,rdc}}$ des productions d'énergie des entités énergétiques déterminées sont telles que, pour chaque pas de temps *t* parmi la pluralité de pas de temps :

$$P_g^{agreg} = \sum_{rdc} \sum_g \sum_{i_{g,rdc}} \left[ P_{i_{g,rdc}} + \delta_{i_{g,rdc}}^+ + \delta_{i_{g,rdc}}^- \right]$$

dans lequel l'optimisation de la fonction objectif est une minimisation, et la fonction objectif correspond à la somme, sur tous les pas de temps *t,* des quantités :

$$p = \sum_{rdc} \sum_g \sum_{i_{g,rdc}} \left[ \delta_{i_{g,rdc}}^+ - \delta_{i_{g,rdc}}^- \right].$$

7. Procédé selon la revendication précédente, dans lequel plus la valeur de la fonction objectif calculée pour les valeurs des productions d'énergie des entités énergétiques et de l'au moins une variable d'ajustement déterminées est élevée, plus la qualité du modèle agrégé (320) est mauvaise.

8. Procédé selon la revendication 1 ou 2, dans lequel les réseaux énergétiques (21, 22, 23) sont des flottes de véhicules électriques, les entités énergétiques sont des batteries électriques, les demandes énergétiques sont des demandes en électricité et les productions d'énergie sont des puissances électriques.

9. Procédé d'optimisation d'un modèle agrégé (320) décrivant un système énergétique, le système énergétique comprenant une pluralité de réseaux énergétiques (21, 22, 23), chaque réseau énergétique comprenant une pluralité d'entités énergétiques, chaque entité énergétique étant associée à une production d'énergie respective pour au moins un réseau énergétique, chaque réseau énergétique étant associé à une demande énergétique respective, le procédé comprenant :

   - mettre en oeuvre le procédé d'évaluation du modèle agrégé (320) décrivant le système énergétique selon l'une des revendications 1 à 8 ;
   - utiliser les valeurs des productions d'énergie des entités énergétiques et de l'au moins une variable d'ajustement qui optimisent la fonction objectif pour déterminer une relation supplémentaire entre l'au moins une production d'énergie agrégée associée au système énergétique et les productions d'énergie des entités énergétiques pour la pluralité de réseaux énergétiques (21, 22, 23) ;
   - mettre à jour le modèle agrégé (320) associé au système énergétique avec la relation supplémentaire déterminée.

10. Dispositif d'évaluation d'un modèle agrégé décrivant un système énergétique, le système énergétique comprenant une pluralité de réseaux énergétiques (21, 22, 23), chaque réseau énergétique comprenant une pluralité d'entités énergétiques, chaque entité énergétique étant associée à une production d'énergie respective pour au moins un réseau énergétique, chaque réseau énergétique étant associé à une demande énergétique respective, le dispositif étant configuré pour mettre en oeuvre le procédé selon l'une des revendications 1 à 8.

11. Produit programme informatique comportant des instructions pour mettre en oeuvre le procédé selon l'une des revendications 1 à 8 lorsque ce programme est exécuté par un processeur.

**FIGURE 1**

REC_MILP(RDC) —⁓ 210

↓

REC_MILP(AGREG) —⁓ 220

↓

DET_MILP(QUANT) —⁓ 230

↓

SOLV_MILP(QUANT) —⁓ 235

↓

EVAL —⁓ 240

↓

DET_CONST —⁓ 250

FIGURE 2

FIGURE 3

**FIGURE 4**

**FIGURE 5a**

**FIGURE 5b**

## FIGURE 6a

## FIGURE 6b

700

705

OUT — 704

702    701

PROC ⟷ MEM

INP — 703

706

**FIGURE 7**

Europäisches
Patentamt

European
Patent Office

Office européen
des brevets

**RAPPORT DE RECHERCHE EUROPEENNE**

Numéro de la demande

EP 24 20 5772

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2019/288551 A1 (TSUBOTA AKIRA [JP] ET AL) 19 septembre 2019 (2019-09-19)<br>* abrégé *<br>* figures 1,4,5,6,7,8,9,10,12,15,16 *<br>* alinéas [0015] - [0018], [0041], [0042], [7466] - [0070], [0079] - [0091] *<br>* revendications 1,2 * | 1-11 | INV.<br>H02J3/38<br>H02J13/00 |
| | ----- | | |
| A | CA 2 745 357 C (EMERSON PROCESS MAN POWER & WATER SOLUTIONS INC [US]) 20 novembre 2018 (2018-11-20)<br>* abrégé *<br>* figures 1,4,6.10,11,12,13 *<br>* alinéas [0029], [0032], [0033], [0034] - [0066], [0080] - [0085], [0103] - [0111], [0123], [0124] *<br>* revendications 1-43 * | 1-11 | |
| | ----- | | |
| A | EP 3 989 383 A1 (ENERGY OBSERVER DEV [FR]) 27 avril 2022 (2022-04-27)<br>* abrégé *<br>* figure 1 *<br>* alinéas [0018] - [0020], [0025], [0026], [0030], [0039], [0045], [0058], [0078], [0094] *<br>* revendication 1 * | 1-11 | **DOMAINES TECHNIQUES RECHERCHES (IPC)**<br><br>H02J |
| | ----- | | |

Le présent rapport a été établi pour toutes les revendications

| Lieu de la recherche | Date d'achèvement de la recherche | Examinateur |
|---|---|---|
| Munich | 28 février 2025 | Fiat, Cyrille |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)

# EP 4 539 292 A1

## ANNEXE AU RAPPORT DE RECHERCHE EUROPEENNE
## RELATIF A LA DEMANDE DE BREVET EUROPEEN NO.

EP 24 20 5772

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-02-2025

| Document brevet cité au rapport de recherche | | Date de publication | Membre(s) de la famille de brevet(s) | | Date de publication |
|---|---|---|---|---|---|
| US 2019288551 | A1 | 19-09-2019 | EP | 3522322 A1 | 07-08-2019 |
| | | | JP | 6663830 B2 | 13-03-2020 |
| | | | JP | 2018057118 A | 05-04-2018 |
| | | | US | 2019288551 A1 | 19-09-2019 |
| | | | WO | 2018061422 A1 | 05-04-2018 |
| CA 2745357 | C | 20-11-2018 | CA | 2745357 A1 | 09-01-2012 |
| | | | CN | 102331758 A | 25-01-2012 |
| | | | DE | 102011051673 A1 | 12-01-2012 |
| | | | GB | 2482763 A | 15-02-2012 |
| | | | HK | 1164472 A1 | 21-09-2012 |
| | | | PH | 12011000213 A1 | 23-12-2016 |
| | | | US | 2012010757 A1 | 12-01-2012 |
| EP 3989383 | A1 | 27-04-2022 | EP | 3989383 A1 | 27-04-2022 |
| | | | FR | 3115614 A1 | 29-04-2022 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019288551 A1
- CA 2745357 C

- EP 3989383 A1